# EUROPÄISCHE PATENTSCHRIFT

(11) **EP 2 380 799 B1**
(45) Veröffentlichungstag und Bekanntmachung des Hinweises auf die Patenterteilung: **24.10.2012**
(21) Anmeldenummer: 11005903.7
(22) Anmeldetag: 03.07.2007
(51) Int. Cl.: B62D 15/02, B62D 7/02, B66F 9/075, B62D 5/04

(54) **Lenkantrieb für ein Rad eines Flurförderzeugs mit einer Vorrichtung zur Erfassung des Ist-Winkels des gelenkten Rades**
Steering drive for the wheel of an industrial truck with a device for recording the actual angle of the steered wheel
Actionnement de direction pour une roue d'un chariot de manutention doté d'un dispositif destiné à la saisie de l'angle réel de la roue dirigée

(30) Priorität: 22.07.2006 DE 102006033958
(43) Veröffentlichungstag der Anmeldung: 26.10.2011
(62) Teilanmeldung aus: 07012981.2
(73) Patentinhaber: Jungheinrich Aktiengesellschaft, 22047 Hamburg (DE)
(72) Erfinder: Mänken, Frank, 24558 Henstedt-Ulzburg (DE); Nommensen, Björn, 31848 Bad Münder (DE); Weber, Christoph, 24558 Henstedt-Ulzburg (DE)
(74) Vertreter: Hauck Patent- und Rechtsanwälte

(56) Entgegenhaltungen:
- EP-A1- 1 792 805
- DE-A1- 10 113 775
- DE-A1- 10 319 448
- DE-A1- 19 911 458

## Beschreibung

Die Erfindung bezieht sich auf einen Lenkantrieb für ein Rad eines Flurförderzeugs mit einer Vorrichtung zur Erfassung des Ist-Winkels des gelenkten Rades nach dem Oberbegriff des Patentanspruchs 1.

Elektrische Lenkantriebe weisen einen Lenkmotor auf, dessen Stellsignal von der erfassten Stellung des Lenkgebers (Deichsel oder Lenkrad) abhängt. Für die Übertragung der Drehbewegung des Lenkmotors auf einen Lenkschemel, durch den das angetriebene Rad um eine vertikale Achse verschwenkbar gelagert ist, ist ein Lenkgetriebe erforderlich, das den mit höherer Drehzahl drehenden Lenkmotor entsprechend untersetzt. Um den Lenkwinkel zu erfassen, ist ein Drehwinkelsensor vorgesehen, dessen Ausgangssignal auf die Lenksteuerung geht.

Es sind verschiedene Möglichkeiten bekannt, den Ist-Winkel des gelenkten Rades mit Hilfe eines Sensors zu erfassen. Bei einer bekannten Ausführungsform ist ein Sensorgetriebe vorgesehen, das mit der Welle des Lenkmotors gekoppelt ist. Wenn der Lenkmotor mit einer Vielzahl von Umdrehungen (zum Beispiel 100 Umdrehungen) über das Lenkgetriebe den Lenkschemel in einem Arbeitsbereich von zum Beispiel ± 90° bewegt, wird der Sensor in seinem Messbereich von zum Beispiel ± 180° ausgelenkt. Hierbei ist der Sensor auf der dem Lenkgetriebe abgelegenen Seite des Lenkmotors angeordnet, was dem zur Verfügung stehenden engen Bauraum entgegenkommt. Nachteilig ist jedoch, dass ein aufwendiges Sensorgetriebe vorgesehen werden muss.

Es ist ferner bekannt, mit der Welle einer Zwischenstufe im Lenkgetriebe das Sensorgetriebe anzutreiben, Auch hier ist die Übersetzung des Sensorgetriebes so zu wählen, dass der Sensor in seinem Messbereich ausgelenkt wird, wenn sich der Lenkschemel in seinem Arbeitsbereich bewegt. Die Übersetzung des Sensorgetriebes ist naturgemäß kleiner als bei der oben beschriebenen Ausführungsform. Nachteilig ist hingegen, dass der Drehwinkelsensor auf der Getriebeseite des Motors angeordnet ist. Der Antrieb eines Sensors über eine Stirnradstufe direkt am Lenkschemel führt zu einem Aufbau mit viel Platzbedarf, da der Lenkschemel naturgemäß einen großen Durchmesser hat.

Es ist schließlich auch bekannt, über Impulsgeber am Lenkschemel und/oder am Lenkmotor den Ist-Winkel zu erfassen. Hierbei wird jedoch nur ein relativ messendes System erhalten, wodurch eine Referenzierungsfahrt bei jedem Start des Lenkantriebs erforderlich ist.

Aus der nachveröffentlichten Druckschrift EP 1 792 805 A1 ist eine Antriebs- und Lenkeinheit für ein Rad eines Flurförderzeugs, bei der ein Fahrmotor und ein Lenkmotor koaxial untereinander angeordnet und jeweils über ein Fahrgetriebe bzw. ein Lenkgetriebe mit einer Welle des Rades bzw. einer Lageranordnung des Rades gekoppelt sind, bekannt geworden, wobei eine Welle als Hohlwelle und die andere Welle durch die Hohlwelle hindurch erstreckt ist. Eine elektronische Steuerung für den Fahr- und Lenkmotor ist auf einer Leiterplatte untergebracht, die koaxial zwischen Fahrmotor und Lenkmotor und/oder Lenkmotor und Lenkgetriebe angeordnet ist. Die auf den Leiterplatten angeordneten Sensoren dienen zur Drehzahlmessung des Fahrmotors und des Lenkmotors.

Aus der Druckschrift DE 101 13 775 A1 ist ein Lenkantrieb mit einem Lenkmotor und einem Lenkgetriebe bekannt geworden. Das Lenkgetriebe ist als Exzentergetriebe ausgebildet.

Aus der Druckschrift DE 103 19 448 A1 ist ein Lenkantrieb mit einem Lenkaktuator für zwei Drehschemel bekannt geworden. Der Lenkaktuator ist als Elektromotor ausgebildet, der unterhalb eines Drehschemelträgers angeordnet und an diesem befestigt ist. Dem Elektromotor ist ein unterhalb des Drehschemelträgers angeordnetes Übersetzungsgetriebe koaxial nachgeschaltet.

Aus der Druckschrift DE 199 11 458 A1 ist ein Lenkantrieb für einen um eine vertikale Achse schwenkbaren Radantrieb eines Flurförderzeugs bekannt geworden. In einer Ausgestaltung sind ein Lenkmotor und ein nachgeschaltetes Lenkgetriebe aneinandergereiht angeordnet und ein Sechskantstab ist in einen Nabenträger eingeschraubt und durch zentrische Ausnehmungen der aneinandergereihten Antriebswellen des Lenkmotors und des Lenkgetriebes hindurchgeführt, sodass oberhalb des Lenkmotors die Drehstellung des Nabenträgers erfasst werden kann. Diese Anordnung entspricht dem Oberbegriff des Anspruchs 1.

Der Erfindung liegt die Aufgabe zugrunde, einen Lenkantrieb für ein Rad eines Flurförderzeugs mit einer Vorrichtung zur Erfassung des Ist-Winkels des gelenkten Rades zu schaffen, mit dem die Erfassung des Drehwinkels des gelenkten Rads verbessert werden kann.
Diese Aufgabe wird durch die Merkmale des Patentanspruchs 1 gelöst.

Bei dem erfindungsgemäßen Lenkantrieb ist die Welle des Lenkmotors als Hohlwelle ausgebildet. Durch die Hohlwelle ist eine Sensor-Antriebswelle hindurch geführt, die getriebeseitig mit der Abtriebsseite des Lenkgetriebes verbunden ist und auf der dem Lenkgetriebe abgewandten Seite des Lenkmotors mit dem Drehwinkelsensor zusammenwirkt. Bei der Erfindung wirkt die Sensor-Antriebswelle über ein Sensorgetriebe auf den Sensor.

Es kann ein sehr einfaches Sensorgetriebe verwendet werden, beispielsweise ein zwei Zahnräder aufweisendes Stirnradgetriebe, von dem ein Rad auf der Antriebswelle und das andere Rad auf der Sensorwelle angeordnet ist.

Die erfindungs gemäße Ausbildung eines Lenkantriebs ist insbesondere dann von Vorteil, wenn die Welle des Lenkmotors ohnehin als Hohlwelle ausgeführt ist, weil der koaxiale Motor für den Antrieb des gelenkten Rades durch die Hohlwelle hindurchgeführt ist.

Eine Ausgestaltung der Erfindung sieht vor, dass die Lenksteuerung auf einer Leiterplatte angeordnet ist, die auf der Sensorseite des Lenkmotors angeordnet ist und den Drehwinkelsensor trägt. Dieser kann, wie bereits erwähnt, ein Potentiometer oder auch ein Hallsensor sein. Die Leiterplatte ist bevorzugt auf dem Schild des Lenkmotorgehäuses angebracht.

Wird eine Antriebswelle des Fahrantriebsmotors durch die Hohlwelle des Lenkmotors hindurchgeführt, ist die Antriebswelle für den Sensor vorzugsweise als Antriebshülse ausgebildet. Nach einer weiteren Ausgestaltung der Erfindung ist das Lenkgetriebe ein ein- oder zweistufiges Planetenkoppelgetriebe mit einem mit dem Drehschemel verbundenen Planetenträger. Die Antriebswelle für den Sensor ist mit dem Planetenträger verbunden. Diese Verbindung kann dadurch erfolgen, dass die Antriebswelle in eine axiale Bohrung des Planetenträgers eingreift und Welle und Bohrung so ausgebildet sind, dass eine Übertragung einer Drehbewegung bewirkt wird. Ausführungsbeispiele der Erfindung werden nachfolgend anhand von Zeichnungen näher erläutert.
- Fig. 1: zeigt schematisch eine erste Ausführungsform eines Lenkantriebs nach der Erfindung.
- Fig. 2: zeigt schematisch eine zweite Ausführungsform eines Lenkantriebs ohne Sensorgetriebe.
- Fig. 3: zeigt eine beispielhafte konstruktive Ausführungsform eines Lenkantriebs nach der Erfindung.
- Fig. 4: zeigt eine Draufsicht auf eine Leiterplatte der Darstellung nach Fig. 3.

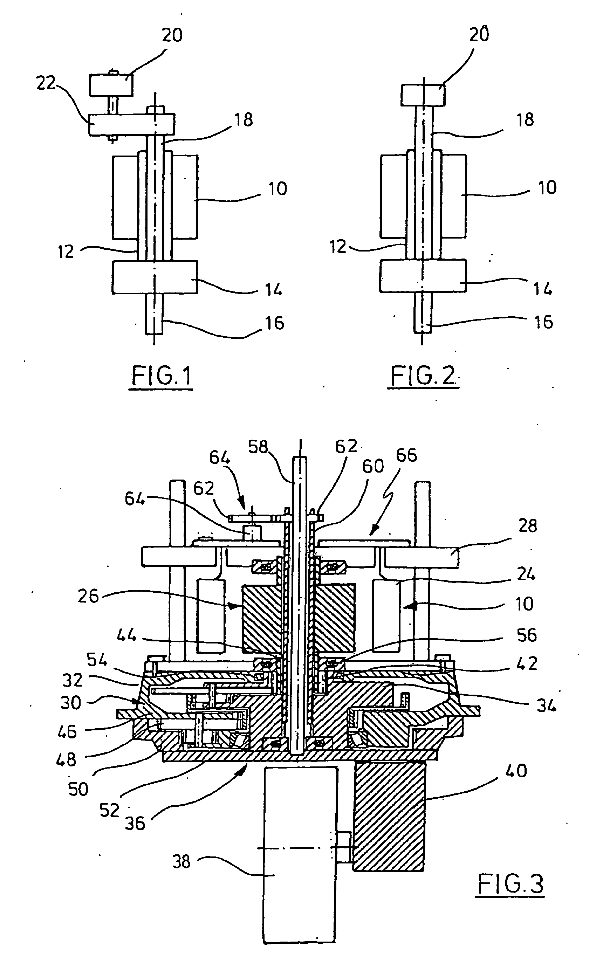

In den Fig. 1 und 2 ist jeweils ein Lenkmotor 10 mit einer Hohlwelle 12 gezeigt, welche mit der Eingangsseite eines Lenkgetriebes 14 gekoppelt ist. Eine Antriebswelle 16 des Lenkgetriebes 14 ist mit einem Lenkschemel eines nicht weiter dargestellten Lenkantriebes für ein Flurförderzeug verbunden. Ein nicht gezeigter Lenkgeber, zum Beispiel eine Deichsel oder ein Lenkrad, erzeugt ein Sollsignal, das in einer nicht gezeigten Lenksteuerung oder -regelung in ein Stellsignal für den Lenkmotor 10 umgewandelt wird. Durch das Lenkgetriebe 14 wird die Drehzahl des Lenkmotors stark reduziert. Der Schwenkbereich des nicht gezeigten gelenkten Rades beträgt zum Beispiel ± 90°.

Eine mit der Antriebsseite des Lenkgetriebes 14 verbundene Antriebswelle 18 ist in den Fig. 1 und 2 durch die Motorwelle 12 hindurch geführt. Bei der Ausführungsform nach Fig. 2 ist die Antriebswelle unmittelbar mit einem fahrzeugfesten Sensor 20 in Wirkverbindung. In Fig. 1 ist der Sensor 20 über ein Sensorgetriebe 22 mit der Welle 18 gekoppelt. Der Sensor hat zum Beispiel einen Messbereich von ± 180°. Die beschriebene Kopplung des Drehwinkelsensors 20 mit dem Lenkschemel führt zur Erfassung des absoluten Lenkwinkels.

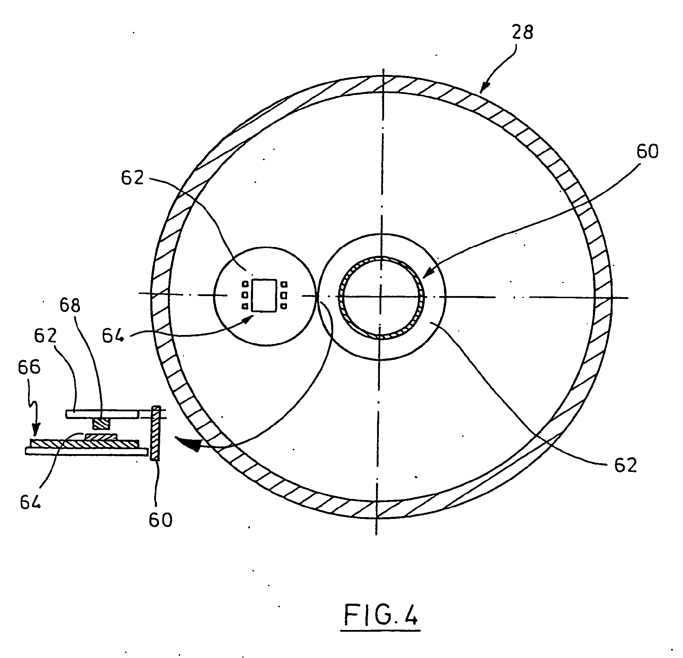

In den Fig. 3 und 4 ist eine mögliche konstruktive Ausführung der Ausführungsform nach Fig. 1 dargestellt. Der Lenkmotor 10 mit einem Stator 24 und einem Rotor 26 ist innerhalb eines Motorgehäuses 28 angeordnet. Das Motorgehäuse 28 ist fest mit einem Getriebegehäuse 30 verbunden, das seinerseits fest mit dem nicht gezeigten Rahmen des nicht gezeigten Flurförderzeugs verbunden ist. Das Getriebegehäuse 30 enthält ein Zweistufen-Planetenkoppelgetriebe mit ersten Stufenplaneten 32, welche in einem Planetenträger 34 gelagert sind. Der Planetenträger 34 ist fest mit einem Lenkschemel 36 verbunden, an dem ein gelenktes Rad 38 gelagert ist. Es ist außerdem von einem nicht gezeigten Antriebsmotor über ein Winkelgetriebe 40 angetrieben. Die größere Stufe der Stufenplaneten 32 kämmt mit einem Ritzel 42, das mit einer Welle 44 des Rotors 26 in Drehverbindung ist. Die kleinere Stufe der Stufenplaneten 32 kämmt mit einer Koppelwelle 46, die außerdem mit der größeren Stufe von zweiten Stufenplaneten 48 zusammenwirkt. Die kleinere Stufe der zweiten Stufenplaneten 48 kämmt mit einem Hohlrad 50, das fest mit dem Lenkschemel 36 verbunden ist.

Der Lenkschemel 36 ist über ein erstes Kegelrollenlager 52 gegenüber einem ringscheibenförmigen Abschnitt 52 des Getriebegehäuses 30 und durch ein weiteres in Achsrichtung versetztes zweites Kegelrollenlager 54 zwischen dem Planetenträger 34 und dem Getriebegehäuse 30 gelagert. Die Rotorwelle 44 ist mit Hilfe eines Lagers 56 gegenüber dem Motorgehäuse 28 gelagert.

Die Rotorwelle 44 ist eine Hohlwelle, und eine Fahrantriebswelle 58 erstreckt sich durch die Rotorwelle 44 und steht in nicht weiter dargestellter Wirkverbindung mit dem Fahrgetriebe 40. Außerdem erstreckt sich durch die hohle Rotorwelle 44 eine Antriebshülse 60. Die Antriebshülse 60 ist drehfest mit dem Planetenträger 34 und damit mit dem Lenkschemel 36 verbunden, indem sie in eine Bohrung des Planetenträgers 34 eingreift. Zwischen Antriebshülse 60 und Planetenträger 34 besteht zum Beispiel eine Keilverzahnung zwecks Drehübertragung.

Die Antriebshülse 60 erstreckt sich über den oberen Schild des Motorgehäuses 28 hinaus und ist drehfest mit einem ersten Stirnrad 62 verbunden, das mit einem zweiten Stirnrad 62 kämmt. Das zweite Stirnrad 62 sitzt auf einem Drehzapfen 64 zum Beispiel eines Potentiometers.

Wie erkennbar, wird eine Drehung des Lenkschemels 36 unmittelbar über die Antriebshülse 60 und das Sensorgetriebe 62, 64 auf einen Sensor 64 übertragen. Dieser sitzt auf einer Leiterplatte 66, welche die Lenksteuerung für den Lenkmotor 10 enthält.

In Fig. 4 ist die Ausführung des Drehwinkelsensors vergrößert dargestellt. Man erkennt, dass eine Magnetanordnung 68 an der Unterseite des Zahnrades 62 angeordnet ist, das mit einem Hallsensor 64 auf der Leiterplatte 66 zusammenwirkt.

## Patentansprüche

1. Lenkantrieb für ein Rad eines Flurförderzeugs mit einer Vorrichtung zur Erfassung des Ist-Winkels des gelenkten Rades, mit einem Lenkmotor (10), einer von einem Lenkwinkelgeber angesteuerten Lenksteuerung oder -regelung, deren Stellsignal auf den Lenkmotor (10) gegeben wird, einem mit der Welle (12, 44) des Lenkmotors (10) gekoppelten Lenkgetriebe (14), dessen Abtriebsseite mit einem Lenkschemel (36) verbunden ist, der das gelenkte Rad (38) lagert und einem Drehwinkelsensor (20, 64), der den Drehwinkel des Lenkschemels (36) erfasst, wobei die Welle (12, 44) des Lenkmotors (10) als Hohlwelle ausgebildet ist, durch die eine Sensor-Antriebswelle (18, 60) hindurch geführt ist, die getriebeseitig mit der Abtriebsseite des Lenkgetriebes (14) verbunden ist und auf der dem Lenkgetriebe (14) abgewandten Seite des Lenkmotors (10) mit dem Winkelsensor (20, 64) zusammenwirkt,
**dadurch gekennzeichnet, dass** die Sensor-Antriebswelle (18, 60) über ein Sensorgetriebe (22) auf den Drehwinkels sensor (20, 64) wirkt.

2. Lenkantrieb nach Anspruch 1, **dadurch gekennzeichnet, dass** das Sensorgetriebe (22) ein Stirnradgetriebe ist.

3. Lenkantrieb nach Anspruch 1 oder 2, **dadurch gekennzeichnet, dass** die Lenksteuerung auf einer Leiterplatte (66) angeordnet ist, die auf der dem Lenkgetriebe (14) abgewandten Seite des Lenkmotors (10) angeordnet ist und auch den Drehzahlsensor (64) trägt.

4. Lenkantrieb nach Anspruch 3, **dadurch gekennzeichnet, dass** der Drehwinkelsensor (64) ein Hallsensor oder ein Potentiometer ist.

5. Lenkantrieb nach Anspruch 3 oder 4, **dadurch gekennzeichnet, dass** die Leiterplatte (66) an dem Schild des Lenkmotorgehäuses (28) angebracht ist.

6. Lenkantrieb nach einem der Ansprüche 1 bis 5, **dadurch gekennzeichnet, dass** das Lenkgetriebe (14) ein ein- oder zweistufiges Planetenkoppelgetriebe ist mit einem fest mit dem Lenkschemel (36) verbundenen Planetenträger (34) und die Sensor-Antriebswelle (18) drehfest mit dem Planetenträger (34) verbunden ist.

7. Lenkantrieb nach Anspruch 6, dadurch gekenntzeichnet dass die Sensor-Antriebswelle (18) formschlüssig in eine axiale Bohrung des Planetenträgers (34) eingreift und Bohrung und Sensor-Antriebswelle (18) Drehmitnahmemittel aufweisen.

## Claims

1. Steering drive for a wheel of a ground conveyor with an apparatus for recording the actual angle of the steered wheel, with a steering motor (10), a steering controller or regulator driven by a steering angle transmitter, the input signal of which is given to the steering motor (10), a steering drive (14) coupled with the shaft (12, 44) of the steering motor (10), the output side of which is connected with a steering plate (36), which mounts the steered wheel (38), and a rotation angle sensor (20, 64) , which records the rotation angle of the steering plate (36), wherein the shaft (12, 44) of the steering motor (10) is designed as a hollow shaft, through which a sensor drive shaft (18, 60) is inserted and which is connected on the drive side with the output side of the steering drive (14) and works together with the angle sensor (20, 64) on the side of the steering motor (10) facing away from the steering drive (14),
**characterized in that** the sensor drive shaft (18, 60) affects the steering angle sensor (20, 64)) via a sensor drive (22).

2. Steering drive according to claim 2, **characterized in that** the sensor drive (22) is a spur wheel drive.

3. Steering drive according to claim 1 or 2, **characterized in that** the steering controller is arranged on a printed circuit board (66), which is arranged on the sensor side of the steering motor (10) and also carries the speed sensor (64).

4. Steering drive according to claim 3, **characterized in that** the rotation angle sensor (64) is a Hall sensor or a potentiometer.

5. Steering drive according to claim 3 or 4, **characterized in that** the printed circuit board (66) is applied to the identification plate of the steering motor housing (28).

6. Steering drive according to one of claims 1 through 7, **characterized in that** the steering drive is a one- or two-stage planetary linkage with a planet carrier (34) connected fixedly with the steering plate (36) and the sensor drive shaft (18) is connected torque-proof with the planet carrier (34).

7. Steering drive according to claim 6, **characterized in that** the drive sensor shaft (18) engages in a form-locking manner in an axial bore hole of the planet carrier (34) and the bore hole and sensor drive shaft (18) have rotating pickup means.

## Revendications

1. Actionnement de direction pour une roue d'un chariot de manutention doté d'un dispositif destiné à la saisie de l'angle réel de la roue dirigée, avec un moteur de direction (10), une commande ou régulation de direction commandée par un capteur angulaire de direction, dont le signal de commande est transmis au moteur de direction (10), un mécanisme de direction (14) couplé à l'arbre (12, 44) du moteur de direction (10), dont le côté sortie est relié à un châssis avant (36) qui abrite la roue dirigé (38), et un capteur angulaire de direction (20, 64) qui détecte l'angle de rotation du châssis avant (36), l'arbre (12, 44) du moteur de direction (10) étant conçu sous forme d'arbre creux qui est traversé par un arbre moteur de capteur (18, 60) et qui est relié dans son côté transmission au côté sortie du mécanisme de direction (14) et qui coopère sur la face opposée au mécanisme de direction (14) du moteur de direction (10) avec le capteur angulaire (20, 64),
**caractérisé en ce que** l'arbre moteur de capteur (18, 60) agit sur le capteur angulaire de direction (20, 64) via un mécanisme de capteur (22).

2. Actionnement de direction selon la revendication 1, **caractérisé en ce que** le mécanisme de capteur (22) est un engrenage cylindrique.

3. Actionnement de direction selon la revendication 1 ou 2, **caractérisé en ce que** la commande de direction est placée sur une carte de circuits imprimés (66) qui est disposée sur la face de capteur du moteur de direction (109 et supporte également le capteur de régime de rotation (64).

4. Actionnement de direction selon la revendication 3, **caractérisé en ce que** le capteur angulaire de rotation (64) est un capteur Hall ou un potentiomètre.

5. Actionnement de direction selon la revendication 3 ou 4, **caractérisé en ce que** la carte de circuits imprimés (66) est posée contre la plaque du carter-moteur de direction (28).

6. Actionnement de direction selon une des revendications 1 à 5, **caractérisé en ce que** le mécanisme de direction (14) est un engrenage planétaire à un ou deux niveaux avec un cage de transmission planétaire (34) relié de manière fixe au châssis avant (36), et l'arbre moteur de capteur (18) est relié à la cage de transmission (34) de façon bloquée contre la rotation..

7. Actionnement de direction selon la revendication 6, **caractérisé en ce que** l'arbre moteur de capteur (18) s'engage par complémentarité de forme dans un perçage axial de la cage de transmission planétaire (34), et le perçage et l'arbre moteur de capteur (18) comportent des moyens d'entraînement en rotation.
